# EUROPEAN PATENT APPLICATION

(11) **EP 4 755 533 A1**
(43) Date of publication of application: **10.06.2026**
(21) Application number: 25218542.6
(22) Date of filing: 26.11.2025
(51) Int. Cl.: B08B 9/093, B05B 3/04, F16H 3/44

(54) **TANK CLEANER WITH GEAR ASSEMBLY**

(30) Priority: 05.12.2024 DE 102024136278
(71) Applicant: GEA Tuchenhagen GmbH, 21514 Büchen (DE)
(72) Inventor: Collins, Richard, CRADLEY WOCESTERSHIRE, WR 13 5JA (GB)
(74) Representative: Eisenführ Speiser

(57) **Abstract**

The invention relates to a tank cleaner (1) comprising a static body (3) for coupling with a supply line (6), a rotating body (4) rotably mounted on the static body (3), a nozzle carrier (8) mounted to the rotating body (4) and having at least one nozzle (82) for dispensing cleaning fluid, a driving arrangement (7) for converting fluid pressure into kinetic energy, a gear assembly (10) having a main input shaft (120) driven by the driving arrangement (7) and a main output shaft (130) for driving the rotating body (4) around the main axis of rotation (R1). The invention suggests that the main input shaft (120) has a first engagement area (123) engaging a first input gear wheel area (142) and at least a second engagement area (124) engaging a second input gear wheel area (144) arranged at a distance (d1) to the first gear wheel area (142).

## Description

The present invention relates to a tank cleaner, in particular orbital cleaner, for cleaning a tank. The tank cleaner comprises a static body having a housing with an upper housing part configured for coupling with a supply line for receiving a cleaning fluid and a lower housing part, a rotating body rotably about a main axis of rotation mounted on the static body, a gear assembly comprising a gear assembly with a main input shaft and a main output shaft extending beyond the housing and being configured to drive the rotating body around the main axis of rotation, and a nozzle carrier mounted to the rotating body, the nozzle carrier having at least one nozzle for dispensing the cleaning fluid.

In the field of tank cleaning, it is common to utilize mechanical cleaning devices to ensure the thorough removal of residues and contaminants from the interior surfaces of tanks. These devices are essential in industries such as food and beverage, pharmaceuticals, and chemicals, where maintaining a high standard of cleanliness is critical. Known systems typically involve the use of rotating nozzles that dispense cleaning fluids under high pressure to dislodge and remove unwanted materials. These systems often employ gear assemblies to convert the fluid pressure into rotational motion, which in turn drives the nozzles. These system often have a turbine type drive linked to the internal gear assembly.

Despite the effectiveness of existing tank cleaning systems, several challenges persist. One significant issue is the reliability of the gear assemblies used to drive the rotating components. Traditional gear assemblies can suffer from wear and tear due to the high mechanical stresses involved, leading to frequent maintenance and potential downtime. Additionally, the efficiency of these systems can be compromised by suboptimal gear engagement, which can result in uneven rotation and inconsistent cleaning performance. According to known designs, the engagement between the input shaft and for torque transmission gear leads to an unequal introduction of stresses, which can exacerbate these issues by concentrating stress on a small area.

Despite the substantial advances in the field of tank cleaning, there remains a need for improved gear assemblies that offer greater reliability, efficiency, and control. It is therefore a technical problem underlying the present invention to provide a tank cleaner that at least partially overcomes the disadvantages of known systems.

It is an object of this invention to provide a tank cleaner that overcomes one or more of the disadvantages of known systems.

According to first aspect of the invention, these objects are addressed by a tank cleaner according to claim 1.

In particular, this object is addressed by a tank cleaner, specifically an orbital cleaner, designed for efficient tank cleaning. The tank cleaner comprises a static body configured to couple with a supply line to receive cleaning fluid, ensuring a stable and reliable connection. A rotating body, mounted on the static body, which rotates about a main axis of rotation, facilitating comprehensive cleaning coverage. The nozzle carrier, attached to the rotating body, includes at least one nozzle for dispensing the cleaning fluid, which may enhance the distribution and impact of the cleaning process. The tank cleaner further has a driving arrangement configured to convert fluid pressure of the received cleaning fluid into kinetic energy and a gear assembly coupled to the driving arrangement. The gear assembly includes a main input shaft driven by the driving arrangement advanced by the received cleaning fluid, and a main output shaft that drives the rotating body around the main axis of rotation. The invention according to the first aspect solves the initially mentioned object by suggesting that the main input shaft features a first engagement area configured to engage a corresponding first input gear wheel area of the gear assembly and a second engagement area configured to engage a corresponding second input gear wheel area arranged at a distance from the first gear wheel area. The first input gear wheel area and the second input gear wheel area are configured to commonly transmit an input torque of the main input shaft for driving the main output shaft. This dual engagement design may address the challenge of ensuring consistent and efficient torque transmission, potentially reducing wear and tear on individual components and enhancing the longevity of the cleaner due to a better distribution of stresses. The arrangement of these components may provide a more balanced and stable operation by distributing an input torque of the main input shaft onto both, the first input gear wheel area and the second input gear wheel area, which together transmit the torque in order to advance the output shaft for driving the rotating body. Such a distribution of torque helps minimizing vibrations and ensuring a more uniform cleaning action.

Further embodiments of the invention are given in the dependent claims, which further develop the concept of the invention with regard to advantageous features in the context of the object of the invention and with regard to further advantages.

According to an embodiment, the gear assembly is configured as a planetary gear having a sun gear, an outer ring gear and a number of gear planets. The planetary gear configuration introduces a highly efficient and compact mechanism for transmitting torque from the main input shaft to the main output shaft, thereby enhancing the rotational drive of the rotating body. The sun gear, being centrally located within the planetary gear system, serves as the primary driver that engages with the gear planets. This arrangement ensures a balanced distribution of forces and smooth rotational motion, which is crucial for maintaining the stability and efficiency of the tank cleaner during operation. The outer ring gear is coaxially arranged to the sun gear, meaning it shares the same central axis but is positioned externally. This coaxial arrangement allows for the seamless transfer of rotational force from the sun gear to the outer ring gear, further optimizing the gear assembly's performance. The outer ring gear's coaxial positioning also contributes to the compact design of the gear assembly, which is beneficial for the overall form factor of the tank cleaner. Additionally, the number of gear planets are rotably about a sub-axis of rotation that is parallel and radially offset from the main axis of rotation. These gear planets, which orbit around the sun gear, play a critical role in the planetary gear system by distributing the input torque evenly across the gear assembly. The parallel and radially offset sub-axis configuration of the gear planets ensures that the rotational forces are balanced and that the gear assembly operates with minimal friction and wear. This arrangement not only enhances the durability and longevity of the gear assembly but also improves the precision and control of the rotational movement of the nozzle carrier. The planetary gear system's ability to provide high torque transmission in a compact and efficient manner makes it particularly suitable for the demanding operational requirements of an orbital cleaner, where precise and powerful rotational motion is essential for thorough cleaning of the tank.

According to a further embodiment, the corresponding first input gear wheel area and the corresponding second input gear wheel area are provided by the number of gear planets. This feature introduces a planetary gear system that distributes the load more evenly across multiple gear planets and its respective first input gear wheel area and the corresponding second input gear wheel area, thereby reducing wear and tear and enhancing the durability and reliability of the gear assembly. Further preferred, the sun gear is provided at the main input shaft. Thereby a direct mechanical linkage that facilitates the transfer of rotational motion from the main input shaft to the gear assembly is established. This configuration ensures that the rotational energy derived from the cleaning fluid is efficiently transmitted, thereby optimizing the driving force applied to the rotating body. Further, the outer ring gear is preferably provided at the output shaft, which serves as a crucial intermediary that translates the rotational motion from the gear assembly to the rotating body. This arrangement ensures a seamless and effective transfer of motion, thereby enhancing the overall rotational dynamics of the tank cleaner. The planetary gear system also allows for a more compact and efficient design, as it can achieve higher torque transmission within a smaller space compared to traditional gear systems. These enhancements collectively contribute to a more robust and efficient tank cleaning mechanism, capable of delivering consistent and powerful cleaning performance.

According to a further embodiment, the number of gear planets is provided on a gear carrier. The gear carrier serves as a support structure, allowing the gear planets to rotate around their own axes while simultaneously revolving around the main axis of rotation. This dual motion facilitates the transmission of torque from the main input shaft to the main output shaft, enhancing the efficiency and stability of the gear assembly. The gear carrier ensures that the gear planets maintain their relative positions and engage correctly with the corresponding gear wheels, thereby ensuring smooth and consistent operation of the gear assembly. The introduction of the gear carrier with gear planets provides several advantages. Firstly, it distributes the load more evenly across the gear assembly, reducing wear and tear on individual components and extending the overall lifespan of the cleaner. Secondly, it enhances the precision of the gear assembly by maintaining the correct alignment of the gear planets, which is crucial for the accurate transmission of motion and force. Thirdly, the use of a gear carrier with gear planets can improve the cleaner's ability to handle variations in the cleaning fluid's pressure and flow rate, as the distributed load and precise alignment help to absorb and compensate for fluctuations, ensuring consistent performance.

According to a further embodiment, the sun gear is provided at the main input shaft and the outer ring gear is provided at the main output shaft. The sun gear, positioned at the main input shaft, serves as a critical component in the transmission of rotational force from the driving arrangement to the gear assembly. This configuration allows for a more efficient and controlled transfer of the cleaning fluid's kinetic energy into mechanical motion, ensuring that the rotational movement of the nozzle carrier is both smooth and consistent. The sun gear's engagement with the corresponding gear wheels within the gear assembly facilitates a precise and reliable transmission of torque, which is essential for maintaining the desired rotational speed and direction of the rotating body. Additionally, the outer ring gear provided at the main output shaft further refines the transmission mechanism by offering a stable and robust interface for the final stage of torque transfer. The outer ring gear's interaction with the gear assembly ensures that the rotational force is evenly distributed and that any potential mechanical losses are minimized.

According to a further embodiment, the sun gear, the outer ring gear at the output shaft and the gear carrier are rotatably mounted, while the gear carrier is fixedly mounted around the main axis of rotation. This configuration establishes a specific mechanism of communication between the components, wherein the sun gear, the outer ring gear and the gear carrier are allowed to rotate freely about the main axis, thereby facilitating the transmission of rotational motion from the main input shaft to the main output shaft through the gear assembly. It is further preferred, that an enclosure part having an inner ring gear is stationary mounted around the main axis of rotation and in engagement with the gear planets. The stationary mounting of the enclosure part ensures that it remains fixed in position, providing a stable framework within which the sun gear, the outer ring gear and the gear carrier can rotate, while the gear planets arranged between the sun gear and the ring gear can further freely rotate around their respective sub axis of rotation.

According to a further embodiment, the corresponding first input gear wheel area and the corresponding second input gear wheel area are both provided spaced apart in the direction of the sub-axis of rotation on at least one of the gear planets. This spatial arrangement allows for a more distributed engagement along the sub-axis, potentially reducing localized wear and tear on the gear teeth and enhancing the overall durability and operational lifespan of the gear assembly. The new feature brings several advantages to the tank cleaner's performance. By spacing the engagement areas apart, the load distribution along the gear planet is improved, leading to smoother transmission of rotational forces from the main input shaft to the gear assembly. This results in more efficient and reliable operation of the rotating body, which is crucial for the consistent and thorough cleaning of the tank.

Additionally, the spaced-apart configuration can help mitigate issues related to gear slippage or misalignment, ensuring that the nozzle carrier maintains its intended rotational motion and delivers the cleaning fluid accurately and effectively. Furthermore, this design enhancement can contribute to reduced maintenance requirements, as the more evenly distributed mechanical stresses can lower the frequency of component replacements and repairs. Overall, the incorporation of spaced-apart first and second input gear wheel areas on the gear planet represents a significant improvement in the mechanical robustness and operational efficiency of the tank cleaner, aligning with the overarching goal of providing a reliable and effective cleaning solution for tanks.

According to a further embodiment, the tank cleaner incorporates an output gear wheel area configured for engaging the main output shaft, strategically positioned between the corresponding first input gear wheel area and the corresponding second input gear wheel area. This configuration facilitates a more efficient transmission of mechanical power from the main input shaft to the main output shaft, thereby enhancing the rotational dynamics of the rotating body around the main axis of rotation. The inclusion of the output gear wheel area between the two input gear wheel areas introduces a more balanced distribution of forces within the gear assembly, mitigating potential wear and tear on individual gear components and promoting a longer operational lifespan. The specific placement of the outer ring gear area between the first and second input gear wheel areas ensures that the torque generated by the driving arrangement, which is powered by the received cleaning fluid, is effectively transferred through the gear assembly to the rotating body. It is preferred, that a distance of the first input gear wheel area from the output gear wheel area is different from a distance of the second first input gear wheel area from the output gear wheel area. Preferably, the output gear wheel area differs in the number of teeth from the first and/or second input gear wheel areas in order to increase the transmission ratio.

According to a further embodiment, the first input gear wheel area arranged on a first distal end of a gear pin engaged by the gear carrier. Furthermore, the second input gear wheel area is preferably arranged on a second distal end of the gear pin engaged by the gear carrier. This configuration allows distributing the mechanical load and reducing the stress on individual components. The dual engagement areas, one at each distal end of the gear pin, ensure that the gear assembly can handle higher torque loads without compromising the integrity of the system. This dual engagement mechanism also allows for smoother and more consistent rotation of the nozzle carrier, which is crucial for achieving uniform cleaning performance within the tank. By ensuring that the gear pins are engaged at both distal ends, the design mitigates the risk of gear slippage and reduces the wear and tear on individual gear components.

According to a further embodiment, the first engagement area and the second engagement area are defined by a set of main gear wheels arranged at a distance in the direction of the main rotation axis. This configuration facilitates a more efficient and reliable transmission of rotational force from the main input shaft to the gear assembly. By having the main gear wheels arranged at a distance along the main rotation axis, the load distribution across the gear assembly is improved, thereby reducing wear and tear on individual gear components. Additionally, the spaced arrangement of the gear wheels allows for better alignment and meshing of the gears, which can lead to more precise control of the rotational speed and torque transmitted to the rotating body.

According to a further embodiment, the first engagement area and the second engagement area are defined by a main gear wheel extending from the first engagement area to the second engagement area. The main gear wheel, extending from the first engagement area to the second engagement area, ensures a continuous and reliable transmission of motion from the main input shaft to the gear assembly. The extension of the main gear wheel across both engagement areas allows for a more balanced distribution of forces, thereby reducing wear and tear on individual components and prolonging the lifespan of the gear assembly.

According to a further embodiment, the first engagement area of the main input shaft features a first longitudinal extension in the direction of the main rotation axis. This longitudinal extension ensures that the engagement area has sufficient surface contact with the corresponding first input gear wheel area of the gear assembly, thereby facilitating a stable and effective transmission of rotational force from the main input shaft to the gear assembly. The second engagement area of the main input shaft, on the other hand, is designed with a second longitudinal extension in the direction of the main rotation axis, which is at least 70% of the first longitudinal extension. This proportional relationship between the first and second longitudinal extensions ensures that the second engagement area also maintains a substantial surface contact with the corresponding second input gear wheel area of the gear assembly. The arrangement of these engagement areas at a distance from each other allows for a more distributed load along the main input shaft, reducing the risk of localized wear and tear and enhancing the durability of the gear assembly. Furthermore, by having the second longitudinal extension at least 70% of the first, the design ensures that the second engagement area is sufficiently large to handle a significant portion of the rotational force, thereby contributing to a balanced and efficient transmission of power from the main input shaft to the rotating body.

According to a further embodiment, the tank cleaner, particularly the orbital cleaner for cleaning a tank, incorporates a first input gear wheel area with a third longitudinal extension that mates with the first longitudinal extension of the main input shaft. Additionally, the second input gear wheel area includes a fourth longitudinal extension that mates with the second longitudinal extension of the main input shaft. The mating of these extensions allows for a more stable transmission of rotational force from the main input shaft to the gear assembly, thereby improving the overall performance of the tank cleaner. By providing an additional point of engagement, the second longitudinal extension and the corresponding fourth longitudinal extension distribute the mechanical load more evenly across the gear assembly. This distribution reduces wear and tear on individual components, thereby extending the operational lifespan of the tank cleaner.

According to a further embodiment, the distance between the corresponding first input gear wheel area and the corresponding second input gear wheel area is defined as a first distance, wherein a second distance between the first engagement area and the second engagement area of the main input shaft is designed to correspond, in particular exactly, to this first distance. This correspondence between the distances ensures that the engagement areas on the main input shaft align perfectly with the respective gear wheel areas of the gear assembly. This alignment is critical for the efficient operation of the gear assembly, as it ensures that the driving arrangement can effectively drive the main input shaft, which in turn drives the main output shaft and the rotating body around the main axis of rotation. The precise correspondence between the distances ensures that the gear assembly operates with high efficiency and minimal wear, as the engagement areas and gear wheel areas are perfectly aligned. This reduces the likelihood of misalignment and the associated mechanical issues, such as increased friction and wear, which can lead to premature failure of the components.

The invention relates in a second aspect to a gear assembly for a tank cleaner according to claim 15. The gear assembly includes a main input shaft configured to be coupled to a driving arrangement to be driven around a main axis of rotation forced by by the received cleaning fluid, and a main output shaft configured to drive the rotating body around the main axis of rotation. In other words, the gear assembly is configured for coupling with a driving arrangement that may convert the fluid pressure of the cleaning fluid into kinetic energy, which in turn forces the main input shaft to rotate. This main input shaft is coupled to the driving arrangement, ensuring a seamless transfer of kinetic energy from the cleaning fluid to the mechanical components of the gear assembly. The main output shaft is configured to drive a rotating body around the main axis of rotation, thereby enabling a nozzle carrier coupled to the rotating body to dispense the cleaning fluid effectively within the tank.

The initially mentioned object is solved in the second aspect by suggesting that the input shaft has a first engagement area that is specifically designed to engage with a corresponding first input gear wheel area of the gear assembly and that the input shaft includes a second engagement area, which engages with a corresponding second input gear wheel area of the gear assembly. This second engagement area is strategically arranged at a distance from the first gear wheel. The first input gear wheel area and the second input gear wheel area are configured to commonly transmit an input torque of the main input shaft for driving the main output shaft. This arrangement allows for a more balanced distribution of force and reducing the wear and tear on individual components. The inclusion of multiple engagement areas on the input shaft not only enhances the durability of the gear assembly but also improves its overall performance by ensuring that the rotational force is evenly distributed across the gear wheels as described with regard to the first aspect of the invention. Thus, benefits and preferred embodiments described with regard to the first aspect of the invention are at the same time benefits and preferred embodiments of the second aspect of the invention.

According to another aspect, the disclosure refers to a tank cleaner of the type initially mentioned and described in the preamble of claim 1. It is suggested that the tank cleaner further has a main bearing configured for bearing the output shaft in a housing of the static body, in particular in a lower housing part. The main bearing is designed as a tapered bearing, in particular a conical bearing, which extends from a lower narrower end facing the rotating body to a larger upper end facing the input shaft. As such, the form of the main bearing accommodates to form of the output shaft which has a correspondingly shaped upper distal end to which the tapered bearing provides a stop shoulder for axial support. The bearing is preferably supported by an upper support edge which is formed corresponding to the tapered bearing and configured to axially fix the tapered bearing. Preferably, the tapered bearing further supports a lower fixed gear mounted to the main output shaft which is configured to translate rotational movement to the nozzle carrier output shaft. The main bearing not only has to support extreme forces implied by the pressure of the liquid entering the tank cleaner both as a normal operating pressure but also to withstand additional water hammer forces. It also must allow the output shaft to rotate and maintain a stable position.

By using having the main bearing designed as a tapered bearing it allows the bearing surface to increase without impacting on the cross-sectional area and to maintain the alignment to remain central. In particular, the tapered bearing may be combined with one, more or all of the preferred embodiments of the invention. In particular, the tapered bearing may be combined with one, more or all of the preferred embodiments of the invention.

According to another aspect, the disclosure refers to a tank cleaner of the type initially mentioned and described in the preamble of claim 1. It is suggested that the tank cleaner further has a spherical bearing configured to support the main input shaft. The spherical bearing is arranged between a distal end of the main input shaft and a mating upper stop surface of the main output shaft. The use of a single spherical ball of any material is used in the tank cleaner as an end of thrust bearing. The spherical ball can be encapsulated in a capsule part or independent of any surrounding support. The benefits of the spherical bearing is to provide an effective, small and low friction bearing within the gear assembly. In particular, the spherical bearing may be combined with one, more or all of the preferred embodiments of the invention.

The present disclosure will be explained in more detail, by way of example, with reference to the drawings in which:
- FIG. 1a:: shows an embodiment of a tank cleaner with a static body, rotating body, nozzle carrier, and nozzles;
- FIG. 1b:: shows a cross-sectional view of the tank cleaner showing the internal components including the supply line, gear assembly and nozzles;
- FIG. 2:: shows an exploded view of a gear assembly for a tank in a first perspective view;
- FIG. 3:: shows a detailed view of a main input shaft of the gear assembly shown in FIG. 2;
- FIG. 4:: shows a detailed view of a gear planet of the gear assembly shown in FIG. 2.

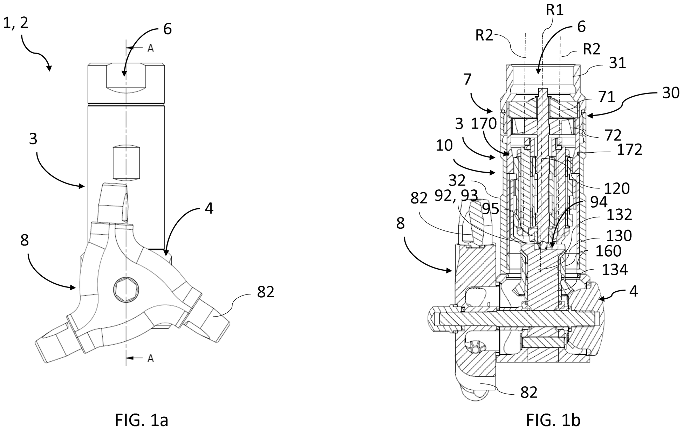

FIG. 1a illustrates a tank cleaner 1, specifically an orbital cleaner 2, designed for cleaning tanks. The tank cleaner comprises a static body 3 configured to couple with a supply line 6 for receiving a cleaning fluid. The static body 3 supports a rotating body 3, which is mounted on the static body 4 rotatably about a main axis of rotation R1. Attached to the rotating body 4 is a nozzle carrier 8, which includes at least one nozzle 82 for dispensing the cleaning fluid.

FIG. 1b provides a sectional view of the tank cleaner 1, offering a detailed look at the internal components and their interconnections. The supply line 6 is connected to the static body 3, which houses a gear assembly 10.

The tank cleaner 1 has a driving arrangement 7 configured to convert fluid pressure of the cleaning fluid received by the supply line 6 into kinetic energy. The driving arrangement 7 includes a stator 71 and an impeller 72, which are housed within an enclosure part 170.

The static body 3 includes a housing 30 with an upper housing part 31 and a lower housing part 32. The upper housing part 31 is configured for coupling with a supply line 6 to receive cleaning fluid. The upper housing part 31 facilitates the connection to the supply line 6, ensuring the cleaning fluid is directed into the housing 30 for subsequent use in the cleaning process. The enclosure part 170 has a seal portion 172 to seal against the upper housing part 31.

The gear assembly 10 includes a main input shaft 120, and a main output shaft 130. The main input shaft 120 is driven by means of the driving arrangement 7 forced by the cleaning fluid received through the supply line 6. The gear assembly 10 is at partly received in the housing 30 such that the output shaft 130 extends from inside the housing 30 into the rotating body 4 in order to drive the rotating body 4 around the main axis of rotation R1. The output shaft 130 is supported in the housing 30 by means of a tapered bearing 132.

A fixed gear 160 is mounted to a lower end of the output shaft 130 extending into the rotating body 4. The fixed gear 160 is supported on the output shaft 130 by means of a ring bearing 134.

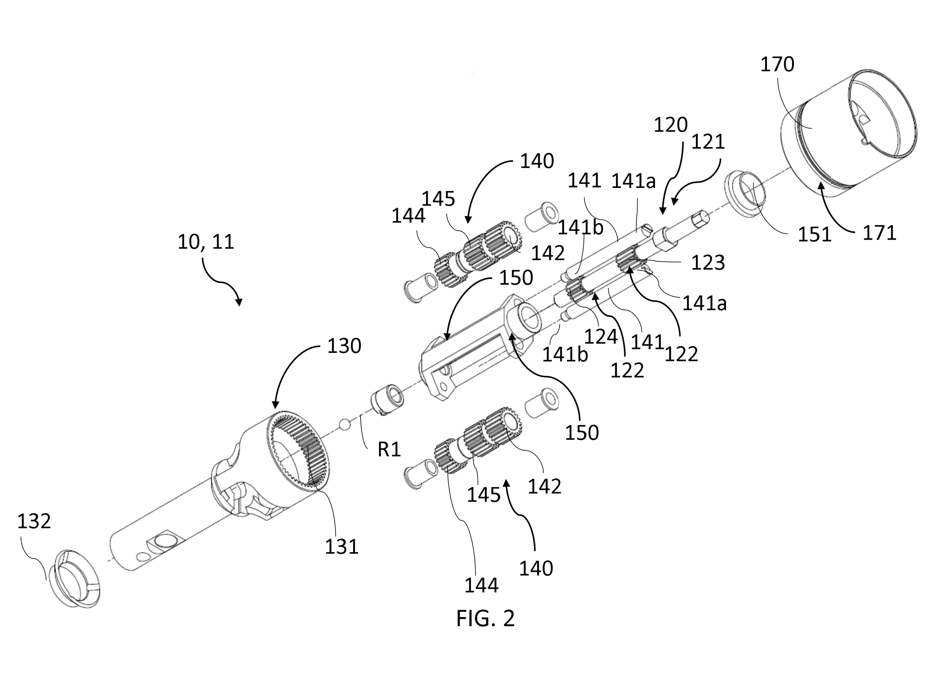

The main input shaft 120 is supported in the housing 30 by a spherical bearing 92 that is preferably formed of ruby. The spherical bearing 92 rests against a mating upper stop surface 94 of the main output shaft 130. Further, the spherical bearing 92 may be encapsulated by a capsule part 95.FIG. 2 illustrates an exploded view of a tank cleaner's gear assembly 10, specifically configured as a planetary gear system 11. Similar or identical parts have identical reference signs in Figures 1a, 1b and 2 and reference is made to the above description of the general configuration of the tank cleaner 1.

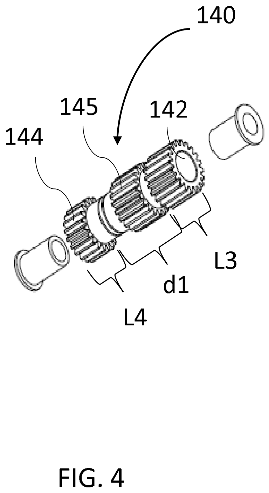

Central to the gear assembly 10 described above is the main input shaft 120. The main input shaft 120 features a first engagement area 123 and a second engagement area 124, which are configured to engage a corresponding first input gear wheel area 142 and a corresponding second input gear wheel area 144 of the gear assembly 10, respectively. These engagement areas 142, 144 are arranged at a distance d1 from each other (cf. FIG. 4).

The first engagement area 123 and the second engagement area 124 on the main input shaft 120 are defined by a set of main gear wheels 122 arranged at a distance in the direction of the main rotation axis R1.

The first input gear wheel area 142 and the second input gear wheel area 144 are provided by the gear planets 140, which are spaced apart in the direction of the sub-axis of rotation R2.

The gear assembly 10 is configured as a planetary gear system 11, comprising a sun gear 121, an outer ring gear 131, and a number of gear planets 140. The sun gear 121 is provided at the main input shaft 120, while the outer ring gear 131 is provided at the main output shaft 130. The gear planets 140 are mounted on a gear carrier 150 and each rotate about its respective sub-axis of rotation R2, which are parallel and radially offset from the main axis of rotation R1. The carrier 150 is rotably mounted around the main axis of rotation R1 and guides the movement of the gear planets 140 around the main axis of rotation R1. The sun gear 121, located on the main input shaft 120, drives the gear planets 140, which in turn drive the outer ring gear 131 on the main output shaft 130. This configuration allows the rotating body 4 to rotate about the main axis of rotation R1, driven by the cleaning fluid received through the supply line 6. The tapered bearing 132 is provided for supporting the main output shaft 130. The form of the tapered bearing corresponds to the outer contour of the main output shaft 130.

The gear planets 140 feature first input gear wheel areas 142 and second input gear wheel areas 144, which are spaced apart along the direction of the sub-axis of rotation R2. These gear wheel areas 142, 144 engage with the corresponding engagement areas 123 and 124 on the main input shaft 120. Additionally, the gear planets 140 include output gear wheel areas 145, which are configured to engage the main output shaft 130, particularly the outer ring gear 131.

The gear planets 140 are defined by gear pins 141 each engaged by the gear carrier 150 each having a first distal end 141a on which the first input gear wheel area 142 is located and a second distal end 141b on which the second input gear wheel area 144 is located. In the shown embodiment, the first gear wheel area 142 is provided by a first input gear wheel and the second input gear wheel area 144 is provided by a second input gear wheel, both either mounted to the respective gear pin 141 or formed integral with the gear pin 141. The output gear wheel area 145 is positioned between the first input gear wheel area 142 and the second input gear wheel area 144. Similar to the first input gear wheel area 142 and the second input gear wheel area 144, the output gear wheel area 145 may be provided by an output gear wheel either mounted to the respective gear pin 141 or formed integral with the gear pin 141. The first gear wheel area 142 and the second input gear wheel area 144 are configured to commonly transmit an input torque of the main input shaft 120. Thus, the input torque of the main input shaft 120 is distributed onto both, first gear wheel area 142 and the second input gear wheel area 144 which together transmit said input torque resulting in rotational movement of the output gear wheel having the output gear wheel area 145.

The gear carrier 150 extends into the enclosure part 170 and supported therein by means of a gear carrier bush 151.

The enclosure part 170 features an inner ring gear area 171 being stationary mounted with regard to the main axis of rotation and which is configured to be in engagement with at least the first gear wheel area 142. The inner ring gear area 171 thus guides the gear planets 140 received in the gear carrier 150.

In summary, FIG. 2 provides a detailed view of the tank cleaner's gear assembly, highlighting the arrangement and interaction of the main input shaft 120, gear planets 140, sun gear 121, outer ring gear 131, and gear carrier 150. This configuration facilitates the efficient transmission of rotational motion from the main input shaft 120 to the rotating body 4, enabling effective cleaning of the tank.

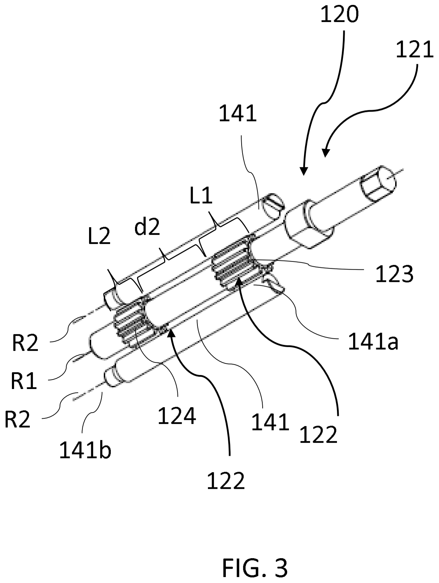

FIG. 3 illustrates a detailed view of the main input shaft 120 and its associated components within the gear assembly 10 of the tank cleaner 1. The main input shaft 120 is configured as a sun gear 121. The sun gear 121 is integral to the planetary gear system 11, engaging with the gear planets 140 to facilitate the rotational movement necessary for the cleaning operation.

The main input shaft 120 features two distinct engagement areas: the first engagement area 123 and the second engagement area 124. These engagement areas are designed to interact with corresponding gear wheel areas 142, 144 (cf. FIG. 4) within the gear assembly 10. The first engagement area 123 is located at a distance d2 from the second engagement area 124.

The engagement areas 123 and 124 are defined by sets of main gear wheels 122. These gear wheels 122 are spaced apart along the main rotation axis, ensuring proper engagement with the corresponding gear wheel areas on the gear planets 140.

FIG. 3 also highlights the longitudinal extensions of the engagement areas. The first engagement area 123 has a first longitudinal extension L1, and the second engagement area 124 has a second longitudinal extension L2, which is at least 70% of the first longitudinal extension L1. Correspondingly, the first input gear wheel area 142 has a third longitudinal extension L3 mating to the first longitudinal extension L1, and the second input gear wheel area 144 has a fourth longitudinal extension L4 mating to the second longitudinal extension L2. A distance d1 between the first input gear wheel area 142 and the second input gear wheel area 144 (cf. FIG. 4) corresponds to the distance d2 between the first engagement area 123 and the second engagement area 124.

FIG. 4 illustrates a detailed view of a part of the gear planet 140, which is a component of the gear assembly 10 in the tank cleaner 1. The gear planet 140 features the first input gear wheel area 142, the second input gear wheel area 144, and the output gear wheel area 145.

The first input gear wheel area 142 is positioned on one end of the gear planet 140 and is characterized by a longitudinal extension L3. The second input gear wheel area 144 is located on the opposite end of the gear planet 140 and has a longitudinal extension L4. The distance between the first input gear wheel area 142 and the second input gear wheel area 144 is denoted as d1. This distance d1 is crucial for the engagement of the corresponding first and second engagement areas 123 and 124 of the main input shaft 120 (cf. FIG. 3).

The output gear wheel area 145 is situated between the first input gear wheel area 142 and the second input gear wheel area 144. This configuration allows the gear planet 140 to interact with both the input and output components of the gear assembly 10, facilitating the transfer of rotational motion from the main input shaft 120 to the main output shaft 130.

The gear planet 140 is designed to rotate about the sub-axis of rotation R2 (cf. FIG. 3), which is parallel and radially offset from the main axis of rotation R1. This arrangement is typical in planetary gear systems, where multiple gear planets 140 rotate around a central sun gear 121 and engage with an outer ring gear 131. The gear planets 140 are mounted on a gear carrier 150, which holds them in place and allows them to rotate freely about their respective sub-axes R2.

The first input gear wheel area 142 and the second input gear wheel area 144 are both configured to engage with corresponding engagement areas on the main input shaft 120 (cf. FIG. 2). The output gear wheel area 145 is configured to engage with the main output shaft 130, specifically with the outer ring gear 131 (cf. FIG. 2). This engagement allows the rotational motion of the gear planets 140 to be transferred to the main output shaft 130, driving the rotating body 4 of the tank cleaner 1 around the main axis of rotation R1.

### Reference Signs

- 1: Tank cleaner
- 2: orbital cleaner
- 3: static body
- 4: rotating body
- 6: supply line
- 7: drive arrangement
- 8: nozzle carrier
- 10: gear assembly
- 11: planetary gear
- 30: housing
- 31: upper housing part
- 32: lower housing part
- 71: stator
- 72: impeller
- 82: nozzle
- 120: main input shaft
- 121: sun gear
- 122: main gear wheel
- 123: first engagement area
- 124: second engagement area
- 130: main output shaft
- 131: outer ring gear
- 132: tapered bearing
- 134: ring bearing
- 140: gear planets
- 141: first gear pin
- 141a: distal end of the first gear pin
- 142: first input gear wheel area
- 143: second gear pin
- 143a: distal end of the second gear pin
- 144: second input gear wheel area
- 145: output gear wheel area
- 150: gear carrier
- 151: gear carrier bush
- 160: fixed gear
- 170: Enclosure part
- 171: internal ring gear part
- 172: seal portion
- L1: first longitudinal extension
- L2: second longitudinal extension
- L3: third longitudinal extension
- L4: fourth longitudinal extension
- d1: (first) distance
- d2: second distance
- R1: main axis of rotation
- R2: sub-axis of rotation

## Claims

1. Tank cleaner (1), in particular orbital cleaner (2), for cleaning a tank, comprising:
- a static body (3) configured for coupling with a supply line (6) for receiving a cleaning fluid,
- a rotating body (4) rotably about a main axis of rotation (R1) mounted on the static body (3),
- a nozzle carrier (8) mounted to the rotating body (4) and having at least one nozzle (82) for dispensing the cleaning fluid,
- a driving arrangement (7) configured to convert fluid pressure of the received cleaning fluid into kinetic energy,
- a gear assembly (10) having a main input shaft (120) coupled to the driving arrangement (7) for driving the main input shaft (120) forced by the received cleaning fluid, and a main output shaft (130) configured to drive the rotating body (4) around the main axis of rotation (R1),
**characterized in that** the main input shaft (120) has a first engagement area (123) configured to engage a corresponding first input gear wheel area (142) of the gear assembly (10) and at least a second engagement area (124) configured to engage a corresponding second input gear wheel area (144) of the gear assembly (10) arranged at a distance (d1) to the first gear wheel area (142), wherein the first input gear wheel area (142) and the second input gear wheel area (144) are configured to commonly transmit an input torque of the main input shaft (120) for driving the main output shaft (130).

2. Tank cleaner (1) according to claim 1,
wherein the gear assembly (10) is configured as a planetary gear (11) having a sun gear (121), an outer ring gear (131) coaxially arranged to the sun gear (121) and a number of gear planets (140) rotably about a sub-axis of rotation (R2) being parallel and radially offset from the main axis of rotation (R1).

3. Tank cleaner (1) according to claim 2,
wherein the sun gear (121) is provided at the main input shaft (120) and/or the outer ring gear (131) is provided at the output shaft and the corresponding first input gear wheel area (142) and/or the corresponding second input gear wheel area (144) are provided by the number of gear planets (140).

4. Tank cleaner (1) according to claim 3,
wherein the number of gear planets (140) is provided on a gear carrier (150)

5. Tank cleaner (1) according to claim 4,
wherein the sun gear (121) is provided at the main input shaft (120) and the outer ring gear (131) is provided at the main output shaft (130).

6. Tank cleaner (1) according to claim 5,
wherein sun gear (121), the outer ring gear (131) and the gear carrier (150) are rotably mounted around the main axis of rotation (R1).

7. Tank cleaner (1) according to claim 6, further comprising:
- an enclosure part (170) having an inner ring gear (171) being stationary mounted around the main axis of rotation (R1) and in engagement with the gear planets (140).

8. Tank cleaner (1) according to any of claims 3 to 7,
wherein the corresponding first input gear wheel area (142) and the corresponding second input gear wheel area (144) are both provided spaced apart in the direction of the sub-axis of rotation (R2) on at least one of the gear planets (140).

9. Tank cleaner (1) according to any one of the preceding claims,
wherein an output gear wheel area (145) configured for engaging the main output shaft (130), in particular the outer ring gear (131), is provided between the corresponding first input gear wheel area (142) and the corresponding second input gear wheel area (144).

10. Tank cleaner (1) according to any one of the claims 3 to 9,
wherein the first input gear wheel area (142) is arranged on a first distal end (141a) of a gear pin engaged by the gear carrier (150) and/or the second input gear wheel area (144) is arranged on a second distal end (143a) of a gear pin engaged by the gear carrier (150).

11. Tank cleaner (1) according to any one of the preceding claims,
wherein the first engagement area (123) and the second engagement area (124) are defined by a set of main gear wheels (122) arranged at a distance in the direction of the main rotation axis, or
wherein the first engagement area (123) and the second engagement area (124) are defined by a main gear wheel (122) extending from the first engagement area (123) to the second engagement area (124).

12. Tank cleaner (1) according to any one of the preceding claims,
wherein the first engagement area (123) has a first longitudinal extension (L1) in the direction of the main rotation axis and the second engagement area (124) has a second longitudinal extension (L2) in the direction of the main rotation axis which is at least 70% of the first longitudinal extension (L1).

13. Tank cleaner (1) according to claim 12,
wherein first input gear wheel area (142) has a third longitudinal extension (L3) mating to the first longitudinal extension (L1) and/or the second input gear wheel area (144) has a fourth longitudinal extension (L4) mating to the second longitudinal extension (L2).

14. Tank cleaner (1) according to any one of the preceding claims,
wherein the distance (d1) between the corresponding first input gear wheel area (142) and the corresponding second input gear wheel area (144) is a first distance (d1) and a second distance (d2) between the first engagement area (123) and the second engagement area (124) corresponds to the first distance (d1).

15. Gear assembly (10) for a tank cleaner (1), in particular for a tank cleaner (1) according to any of the claims, having a main input shaft (120) configured to be coupled to a driving arrangement (7) for driving the main input shaft (120) forced by the received cleaning fluid, and a main output shaft (130) configured to drive the rotating body (4) around the main axis of rotation (R1),
**characterized in that** the input shaft has a first engagement area (123) configured to engage a corresponding first input gear wheel area (142) of the gear assembly (10) and a second engagement area (124) configured to engage a corresponding second input gear wheel area (144) of the gear assembly (10) arranged at a distance (d1) to the first gear wheel area (142), wherein the first input gear wheel area (142) and the second input gear wheel area (144) are configured to commonly transmit an input torque of the main input shaft (120) for driving the main output shaft (130).
